# FASCICULE DE BREVET EUROPEEN

(11) **EP 2 939 015 B1**
(45) Date de publication et mention de la délivrance du brevet: **26.06.2019**
(21) Numéro de dépôt: 13802955.8
(22) Date de dépôt: 09.12.2013
(51) Int. Cl.: G01N 29/04, G01N 29/22, G01N 29/265

(54) **DISPOSITIF DE CONTRÔLE NON DESTRUCTIF AUTOMATISÉ DE RAIDISSEURS D'UNE STRUCTURE COMPOSITE D'AÉRONEF**
AUTOMATISIERTES ZERSTÖRUNGSFREIES KONTROLLGERÄT FÜR VERSTEIFER EINER FLUGZEUGKOMPOSITKOMPONENTE
AUTOMATED NONDESTRUCTIVE CONTROL DEVICE FOR STIFFENERS OF AN AIRCRAFT COMPOSITE STRUCTURE

(30) Priorité: 28.12.2012 FR 1262938
(43) Date de publication de la demande: 04.11.2015
(73) Titulaire: AIRBUS (SAS), 31700 Blagnac (FR)
(72) Inventeur: BOSQUET, Catherine, F-44240 Sucé sur Erdre (FR); THOMAS, Bruno, F-75015 Paris (FR); LE PINRU, Louis, F-44400 Rezé (FR)
(74) Mandataire: Gicquel, Olivier Yves Gérard
(86) Numéro de dépôt international: PCT/EP2013/075982
(87) Numéro de publication internationale: WO 2014/102055

(56) Documents cités:
- US-A1- 2006 162 456
- US-A1- 2006 243 051
- US-B1- 6 167 760

## Description

### Domaine de l'invention

L'invention concerne un dispositif de contrôle non destructif automatisé des raidisseurs d'une structure en matériaux composites autoraidie d'un aéronef. Ce dispositif permet de contrôler l'état de santé matière d'un raidisseur de façon automatique même lorsque la structure est fermée ou de dimensions réduites. Ce contrôle est réalisé au moyen d'un capteur à ultrasons monté sur un portique embarqué.

L'invention concerne également un système pour le contrôle des raidisseurs de structures en matériaux composites comportant le dispositif décrit précédemment destiné à être embarqué dans la structure ainsi que des dispositifs de visualisation et de commande déportés.

L'invention trouve des applications dans le domaine de l'aéronautique et, en particulier, dans le domaine du contrôle de pièces aéronautiques avant montage de l'aéronef ou en cours de maintenance.

### Etat de la technique

Dans le domaine du contrôle des pièces aéronautiques, et notamment des raidisseurs, il est connu d'utiliser un capteur à ultrasons pour effectuer un contrôle non destructif manuel de l'état de santé matière des raidisseurs montés sur une structure d'aéronef. Le capteur envoie des signaux ultrasonores vers le raidisseur. Ces signaux ultrasonores sont émis au travers dudit raidisseur et réfléchis par les différentes interfaces traversées. Le temps de vol et l'amplitude du signal ultrasonore reçus donnent des informations sur la santé matière de la pièce.

Généralement, le capteur à ultrasons est monté à l'extrémité d'un manche déplacé manuellement par un opérateur. Ce capteur à ultrasons est relié à un écran de visualisation qui affiche l'image de l'état de santé interne du raidisseur au fur et à mesure du déplacement du capteur à ultrasons. Ainsi, l'image affichée sur l'écran défile à mesure que l'opérateur déplace le capteur à ultrasons le long du raidisseur.

Une telle opération est généralement contraignante car elle nécessite une grande attention de la part de l'opérateur qui doit déplacer le capteur à ultrasons en s'assurant que celui-ci est bien en contact avec la surface du raidisseur et qui doit, en même temps, visualiser l'écran de visualisation pour vérifier l'état de la zone contrôlée du raidisseur. Cette opération nécessite que l'opérateur soit qualifié, ce qui entraine un coût de main d'oeuvre relativement élevé.

De plus, ce procédé implique un contrôle de l'état santé interne du raidisseur, raidisseur par raidisseur. Compte tenu du nombre de raidisseurs montés sur chaque structure d'aéronef, on comprend que le contrôle complet de tous les raidisseurs d'une structure est long et fastidieux.

En outre, comme l'opérateur doit pouvoir accéder au raidisseur et suivre le raidisseur sur toute sa longueur, seules des structures ouvertes peuvent être contrôlées, c'est-à-dire des structures planes ou des structures possédant une accessibilité aisée pour l'opérateur. Ainsi, seuls des panneaux de structures peuvent être contrôlés. Les structures fermées, comme les caissons, pour lesquelles il n'existe que de petites ouvertures latérales ne peuvent être contrôlées par le procédé classique. Or, avec l'arrivée sur le marché d'aéronefs réalisés en grande partie en matériaux composites, de plus en plus de structures fermées sont fabriquées en matériaux composites avec des raidisseurs répartis sur la paroi interne de ces structures.

On connait dans l'art antérieur la demande de brevet US 2006/243051 qui décrit un dispositif de contrôle non destructif par ultrasons d'une structure en matériau composite. Ce dispositif de contrôle est adapté pour contrôler des structures en U ou en L. On connait aussi le brevet US 6 167 760 qui décrit un dispositif de contrôle par ultrasons d'une structure en forme de I. Enfin on peut citer la demande de brevet US 2006/162456 qui décrit un dispositif d'inspection en continu de lisses à profil en chapeau comprenant le déplacement le long de la lice d'une ou plusieurs sondes.

Il existe donc un réel besoin d'un dispositif de contrôle par ultrasons automatique qui puisse se déplacer de façon autonome le long des raidisseurs des structures en matériaux composites, quelle que soit la forme de la structure (fermée ou ouverte).

### Exposé de l'invention

L'invention a justement pour but de remédier à ce manque en proposant un dispositif de contrôle par ultrasons automatisé, se déplaçant en toute autonomie le long des raidisseurs d'une structure en matériaux composites auto raidie. Pour cela, le dispositif de l'invention comporte un capteur à ultrasons monté sur un portique apte à se déplacer le long du raidisseur tout en assurant une pression du capteur à ultrasons contre le raidisseur et en transmettant une image de la santé matière du raidisseur vers un dispositif d'affichage d'images déporté.

De façon plus précise, l'invention concerne un dispositif de contrôle d'un raidisseur d'une structure en matériaux composites d'un aéronef, comportant au moins un capteur à ultrasons apte à fournir des mesures relatives à un état de santé interne du raidisseur. L'état de santé interne d'un raidisseur est l'état de santé de la matière formant le raidisseur, appelé aussi état de santé matière. Ce dispositif se caractérise par le fait qu'il comporte :
- une enceinte de protection du capteur à ultrasons, dans laquelle est logé ledit capteur à ultrasons,
- un portique mobile apte à se déplacer le long du raidisseur et à l'intérieur duquel est montée l'enceinte avec le capteur à ultrasons,
- des moyens d'entrainement aptes à entrainer le portique en déplacement le long du raidisseur,
- des moyens de serrage, solidaires de l'enceinte de protection et aptes à maintenir le capteur à ultrasons en pression contre la surface à contrôler du raidisseur,
- des moyens de localisation pour synchroniser chaque zone de la surface du raidisseur avec la mesure du capteur à ultrasons:
   Ce dispositif peut comporter une ou plusieurs des caractéristiques suivantes :
   - les moyens de serrage comportent au moins un ressort de pression, un patin de paroi ayant une face avant alignée avec une face avant du capteur à ultrasons et une face arrière sur laquelle le ressort est en appui, et au moins une roulette logée dans la face avant du patin de paroi et apte à rouler sur la surface du raidisseur pour assurer un contact mécanique entre le patin de paroi et le raidisseur.
   - l'enceinte de protection comporte un réservoir d'eau apte à maintenir un voile d'eau entre le capteur à ultrasons et la surface du raidisseur.
   - les moyens d'entrainement comportent un moteur relié à au moins une roue motrice apte à déplacer le portique.
   - le portique a une forme de U inversé comportant deux jambes latérales destinées à être positionnées de part et d'autre du raidisseur et un pont reliant les deux jambes latérales.
   - la roue motrice est logée dans un module solidaire du portique et formant une jambe centrale dudit portique.
   - le module est situé en regard de l'enceinte de protection du capteur, le long d'une surface opposée à la surface contrôlée du raidisseur.
   - les moyens de localisation comportent un codeur apte à déterminer une position du capteur à ultrasons au fur et à mesure de son déplacement.
   - il comporte des moyens de détection de fin de trajectoire reliés aux moyens d'entrainement pour arrêter automatiquement le déplacement du portique à la fin du raidisseur.
   - l'enceinte de protection du capteur à ultrasons a une forme épousant la forme du raidisseur.

L'invention concerne également un système de contrôle de l'état de santé interne d'un raidisseur, comportant le dispositif de contrôle décrit précédemment, relié à un dispositif de visualisation apte à afficher les mesures issues du capteur à ultrasons et, à un dispositif de commande.

### Brève description des dessins

La figure 1 représente une vue en perspective du dispositif de contrôle par ultrasons selon l'invention.
La figure 2 représente une vue de coté du dispositif de contrôle par ultrasons selon l'invention.
Les figures 3A et 3B représentent des vues schématiques simplifiées du dispositif des figures 1 et 2 monté sur un raidisseur.
La figure 4 représente une vue schématique du système de contrôle de l'invention.

### Description détaillée de modes de réalisation de l'invention

Le dispositif de contrôle par ultrasons de l'invention est un dispositif automatique et autonome pouvant se déplacer le long d'un raidisseur hors présence d'un opérateur. Ce dispositif de contrôle est équipé d'un capteur à ultrasons du même type que ceux utilisés dans l'art antérieur. Cependant, dans l'invention, le capteur à ultrasons est monté sur un portique mobile, apte à se déplacer le long du raidisseur et à maintenir ledit capteur à ultrasons constamment en pression contre le raidisseur.

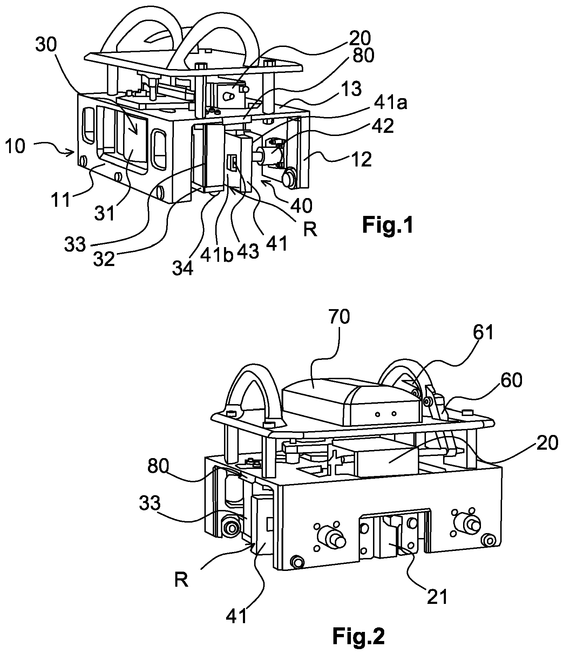

Un exemple d'un dispositif selon l'invention est représenté sur les figures 1 et 2. Ces figures montrent un portique mobile 10 équipé de moyens d'entrainement 30 aptes à entrainer le portique en déplacement le long d'un raidisseur, non représenté sur ces figures mais schématisé par la flèche R. Dans l'invention, le portique 10 est un support en forme de U inversé comportant deux jambes latérales 11, 12 et un pont 13 reliant les deux jambes 11 et 12. Les jambes 11 et 12 sont placées de part et d'autre du raidisseur à vérifier. Le pont 13 est situé à une hauteur supérieure à la hauteur du raidisseur. De préférence, il est prévu un écart de plusieurs centimètres entre l'âme du raidisseur et le pont 13 pour assurer une adaptation du dispositif de contrôle de l'invention à toutes sortes de raidisseurs.

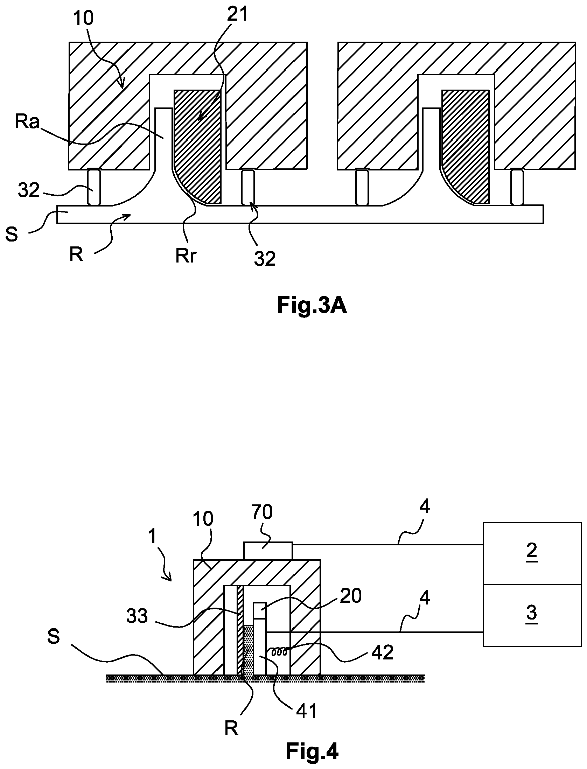

Les moyens d'entrainement 30 comportent un moteur 31 relié électriquement à au moins une roue motrice 32. Cette roue motrice 32 est logée dans un module 33 solidaire du portique 10. Ce module 33 forme une jambe centrale dudit portique. La roue motrice 32, montrée notamment sur la figure 3A, est montée parallèle au raidisseur R et entraine l'ensemble du portique 10. La roue motrice 32 est entrainée en rotation par le moteur 31.

Plusieurs roues motrices 32 peuvent être montées sur le module 33 pour assurer un déplacement régulier du portique le long du raidisseur. Dans ce cas, le moteur 31 entraine chacune des roues motrices.

La ou les roues motrices 32 peuvent être réalisées dans une matière adhérente comme de l'élastomère pour permettre une adhérence du portique sur la surface du raidisseur, facilitant l'entrainement du portique 10. Des roues 34, solidaires du portique 10, permettent de maintenir le dispositif sur la surface S de la structure. De cette façon, le dispositif de l'invention peut être utilisé sur des surfaces qui ne sont pas nécessairement horizontales. Il peut être utilisé, par exemple, sur des surfaces de structures formant un angle de 45° ou même de 90° par rapport à l'horizontale. On comprend ainsi que le dispositif de contrôle de l'invention permet un gain de temps considérable lors du contrôle de raidisseurs de structures incurvées ou fermée puisque les raidisseurs peuvent être vérifiés sans déplacer la structure, quel que soit l'emplacement du raidisseur sur cette structure.

Le portique 10 est équipé également d'une enceinte de protection 20 à l'intérieur de laquelle est installé le capteur à ultrasons 21 et de moyens de serrage 40 assurant le maintien en pression du capteur à ultrasons 21 contre le raidisseur R.

En effet, pour que le capteur à ultrasons 21 fonctionne de façon optimale, il est important qu'il soit mécaniquement en pression contre le raidisseur R. Pour cela, les moyens de serrage 40 comportent un patin de paroi 41 ayant une face avant 41b plane et parallèle à la surface du raidisseur R. Le patin de paroi 41 a sa face avant 41b alignée avec une face avant du capteur à ultrasons. Les moyens de serrage comportent en outre un ressort de pression 42 monté sur la face arrière 41a (opposée à la face avant 41b) du patin de paroi 41. Ce ressort 42 est apte à pousser le patin de paroi 41 contre le raidisseur afin d'assurer un contact mécanique entre ledit patin et ledit raidisseur quel que soit l'état de surface du raidisseur. Le patin de paroi 41 comporte aussi au moins une roulette 43 montée dans un logement situé sur la face avant 41b. Cette roulette 43, montée de façon à être légèrement en saillie par rapport à son logement, est prévue pour être en contact avec le raidisseur et rouler sur la surface à vérifier dudit raidisseur.

L'enceinte de protection 20 contenant le capteur à ultrasons 21 est montée solidaire du patin de paroi 41. Comme le patin de paroi 41 est fixe longitudinalement mais mobile transversalement par rapport au portique 10, le capteur à ultrasons 21 est maintenu à une distance toujours identique de la surface du raidisseur R. Ainsi, quels que soient les éventuels défauts de surface du raidisseur (rainure, aspérité, bosse, etc.) le capteur à ultrasons 21 capte une information de qualité toujours optimale.

On comprend de ce qui précède que, pour effectuer un contrôle, le dispositif de contrôle est positionné autour du raidisseur R de façon à ce que le raidisseur R soit installé entre, d'une part, le module 33 et, d'autre part, l'ensemble formé de l'enceinte de protection 20 et du patin de paroi 41. Le module 33 étant solidaire du portique 10, il entraine ledit portique en déplacement le long du raidisseur. De l'autre coté du raidisseur par rapport au module 33, se trouvent l'enceinte de protection 20 avec le capteur à ultrasons 21 et le patin de paroi 41. L'enceinte de protection avec le capteur à ultrasons est entrainée en déplacement par le module 33. Ainsi, la surface du raidisseur située en regard de l'enceinte de protection 20 et du patin de paroi 41 peut être vérifiée au fur et à mesure du déplacement de ladite enceinte de protection avec le capteur à ultrasons.

Selon l'invention, le portique supporte également des moyens de localisation installés dans le module 33. Ces moyens de localisation permettent d'associer un code à chaque emplacement de la surface du raidisseur afin que l'opérateur puisse localiser les éventuels défauts du raidisseur. Ces moyens de localisation comportent, par exemple, une roue codeuse, ou codeur, apte à déterminer la position du capteur à ultrasons au fur et à mesure de son déplacement. Ils permettent ainsi de synchroniser chaque défaut du raidisseur avec une localisation de la zone où est situé ce défaut. De cette façon, le dispositif de contrôle de l'invention génère une cartographie du raidisseur (incluant les hypothétiques défauts). L'opérateur, à la lecture de cette cartographie, peut déterminer si l'état de santé matière du raidisseur est satisfaisant ou non.

Dans une variante de l'invention, le dispositif de contrôle comporte des moyens de détection de fin de trajectoire reliés aux moyens d'entrainement pour arrêter automatiquement le déplacement du portique à la fin du raidisseur. Ces moyens de détection de fin de trajectoire peuvent comprendre un ou plusieurs détecteur(s) de fin de course 80. Ce détecteur de fin de course, installé par exemple sous le pont 13 du portique, au niveau du patin de paroi 41, est apte à détecter la présence ou l'absence de raidisseur. Dès qu'il détecte l'absence de raidisseur, il envoie un signal aux moyens d'entrainement. A réception de ce signal, le moteur 31 cesse l'entrainement de la roue motrice, ce qui a pour effet d'arrêter le déplacement du portique 10.

Dans un mode de réalisation de l'invention, le portique 10 est équipé de pinces 60 reliées à l'enceinte de protection 20 (comme c'est le cas sur la figure 2) et aux moyens de serrage 40. Ces pinces 60, avec leur targette 61, permettent d'écarter l'enceinte de protection et le patin de paroi du module 33 pour que le raidisseur R puisse être positionné entre ces éléments de la façon expliquée précédemment. Ces pinces 60 ainsi que les moyens de serrage 40 permettent d'adapter le dispositif de contrôle à toutes sortes de raidisseurs avec toutes sortes d'épaisseurs.

Il est connu que, pour avoir des performances optimales, le capteur à ultrasons nécessite un milieu couplant, généralement de l'eau, permettant le propagation des ultrasons. Pour cela, dans l'invention, il est prévu qu'un voile d'eau soit appliqué le long de la surface du raidisseur. Ce voile d'eau peut être obtenu par une arrivée d'eau située au-dessus du capteur à ultrasons. Dans ce cas, l'enceinte de protection 20 comprend un réservoir d'eau placé entre le capteur à ultrasons 21 et le pont 13 du portique. Une ouverture au fond du réservoir permet à l'eau de couler le long de la surface du raidisseur, devant le capteur à ultrasons.

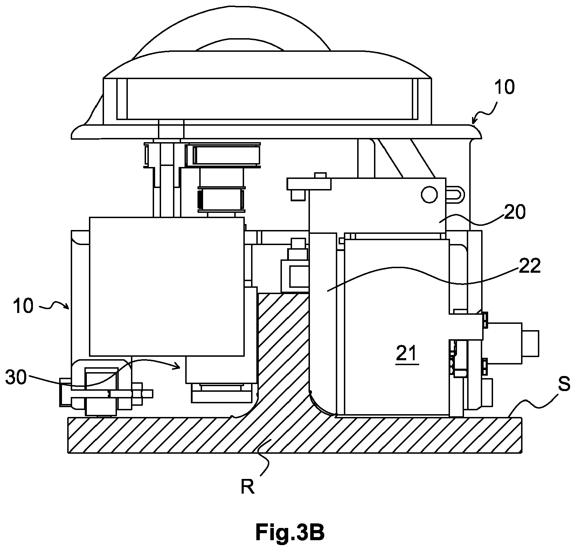

Le voile d'eau peut être obtenu par une colonne d'eau 22, comme montré sur la figure 3B, placée entre le capteur à ultrasons 21 et le raidisseur R.

Le voile d'eau peut être obtenu également par un dispositif à spray installé dans l'enceinte de protection, au-dessus du capteur à ultrasons. Un tel dispositif à spray permet de pulvériser des gouttelettes d'eau sur la surface du raidisseur à vérifier.

L'alimentation en eau du dispositif de contrôle de l'invention est effectuée au moyen d'un tuyau (non représenté sur les figures), par exemple en silicone, reliant le réservoir d'eau ou le dispositif à spray à une source d'alimentation en eau déportée.

Selon l'invention, le capteur à ultrasons est installé dans l'enceinte de protection 20, face à la surface du raidisseur à vérifier. Ce capteur à ultrasons 21 est apte à fournir des mesures relatives à chaque zone de la surface du raidisseur. Il est donc apte à fournir des mesures relatives à l'âme du raidisseur, c'est-à-dire la paroi rectiligne du raidisseur (paroi sensiblement perpendiculaire à la surface de la structure sur laquelle est monté le raidisseur), mais également au rayon du raidisseur, c'est-à-dire la partie arrondie du raidisseur qui relie l'âme et la surface de la structure. Les figures 3A et 3B montrent de façon très schématique un exemple de raidisseur R monté sur une structure S. Le raidisseur R comporte une âme Ra et un rayon Rr. Le dispositif de contrôle 1 est représenté schématiquement par le portique 10 (qui intègre ici le moteur 31, le module 33, les moyens de serrage 40, les moyens de détection de fin de trajectoire 80), le capteur à ultrasons 21 et les roues motrices 32. Le capteur à ultrasons 21 peut être choisi en fonction du type de raidisseur à vérifier. Par exemple, pour un raidisseur en T, comme montré sur les figures 3A et 3B, l'enceinte du capteur à ultrasons 21 a une forme arrondie lui permettant d'être en contact à la fois avec le rayon Rr et l'âme Ra dudit raidisseur R. Le capteur à ultrasons a une forme qui lui permet d'épouser parfaitement la forme du raidisseur. D'autres types de capteurs à ultrasons peuvent bien entendu être montés dans le dispositif de contrôle de l'invention pour assurer le contact avec le raidisseur.

Une fois monté dans l'enceinte de protection, le capteur à ultrasons peut être protégé, notamment des retombées d'eau, par une paroi étanche positionnée sur la face arrière dudit capteur.

Comme on le voit sur la figure 2, le pont 13 du portique 10 est équipé d'une interface de connexion électrique 70. Cette interface de connexion 70 comporte des sorties de câbles électriques permettant de relier électriquement le dispositif de contrôle à un dispositif de commande et un dispositif de visualisation déportés. Sur la figure 4, on a représenté le dispositif de commande 1 qui vient d'être décrit avec son câblage électrique 4. Ce câblage électrique 4 peut cheminer le long du portique 10, sans risque, puisque le portique se déplace uniquement longitudinalement le long du raidisseur, mais jamais transversalement. Toutefois, une variante de l'invention prévoit de munir les câbles électriques 4 d'un dispositif d'enroulement automatique qui permet de dérouler les câbles lorsque le portique avance et d'enrouler les câbles lorsque le portique recule.

Ces câbles électriques 4 sont reliés, d'une part, à un dispositif de visualisation 3 sur lequel un opérateur peut visualiser les mesures issues du capteur à ultrasons et, d'autre part, à un dispositif de commande 2. Le dispositif de commande 2 permet à l'opérateur de commander le déplacement, en avant ou en arrière, du dispositif de contrôle 1. En effet, même si le dispositif de contrôle 1 de l'invention est prévu pour fonctionner dans un sens (appelé sens avant), il peut être amené également à reculer, par exemple pour être récupéré par l'opérateur une fois que la vérification du raidisseur a été effectuée.

Le dispositif de visualisation 3 assure l'acquisition du signal mesuré par le capteur à ultrasons et l'affichage de la cartographie ainsi acquise. Il permet ainsi, à l'opérateur, de visualiser et d'analyser, de façon déportée, l'état de santé interne du raidisseur d'après la cartographie.

Il est bien entendu que le dispositif de commande 2 et le dispositif de visualisation 3 peuvent être regroupés en une seule et même machine.

Selon une variante de l'invention, les données mesurées par le capteur à ultrasons sont enregistrées, ce qui permet à un même opérateur de vérifier l'état de plusieurs raidisseurs contrôlés simultanément par plusieurs dispositifs de contrôle. Il est en effet possible de disposer plusieurs dispositifs de contrôle, en parallèle, autour de plusieurs raidisseurs (comme montré sur la figure 3A) afin de diminuer le temps de contrôle global d'une structure. Il est aussi possible, pour diminuer les frais de main d'oeuvre, de confier la mise en place de plusieurs dispositifs de contrôle à un opérateur non qualifié et la vérification de toutes les cartographies obtenues par ces dispositifs de contrôle à un opérateur qualifié.

Le dispositif de contrôle qui vient d'être décrit a des dimensions de l'ordre de 200 mm³ et un poids d'environ 2Kg. Il est donc facile à manier et à installer autour d'un raidisseur, même lorsque le raidisseur est difficile d'accès, par exemple dans une structure fermée. Du fait de son faible encombrement, il peut être installé autour de tous les raidisseurs, quel que soit l'écart entre deux raidisseurs. De plus, ses moyens de serrage lui permettent, non seulement, de s'adapter à toutes les épaisseurs de raidisseurs, mais aussi, de contrôler tous les raidisseurs d'une structure, même lorsque la structure n'est pas plane.

En outre, son faible encombrement et son autonomie permettent une utilisation en maintenance, en plus d'une utilisation après fabrication.

## Revendications

1. Dispositif de contrôle d'un raidisseur d'une structure en matériaux composites d'un aéronef, comportant
- au moins un capteur à ultrasons (21) apte à fournir des mesures relatives à un état de santé interne du raidisseur,
- une enceinte de protection (20) du capteur à ultrasons, dans laquelle est logé ledit capteur à ultrasons,
- un portique mobile (10) apte à se déplacer le long du raidisseur (R) et à l'intérieur duquel est montée l'enceinte de protection avec le capteur à ultrasons, le portique mobile ayant une forme en U inversé et comportant deux jambes latérales placées de part et d'autre du raidisseur,
- des moyens d'entrainement (30) aptes à entrainer le portique (10) en déplacement le long du raidisseur, lesdits moyens d'entrainement étant logés dans un module (33) solidaire du portique et formant une jambe centrale dudit portique,
- des moyens de serrage (40), solidaires de l'enceinte de protection et aptes à maintenir le capteur à ultrasons (21) en pression contre la surface à contrôler du raidisseur (R),
- des moyens de localisation pour synchroniser chaque zone de la surface du raidisseur avec la mesure du capteur à ultrasons.

2. Dispositif de contrôle selon la revendication 1, **caractérisé en ce que** les moyens de serrage (40) comportent :
- au moins un ressort de pression (42),
- un patin de paroi (41) ayant une face avant alignée avec une face avant du capteur à ultrasons et une face arrière sur laquelle le ressort est en appui, et
- au moins une roulette (43) logée dans la face avant du patin de paroi et apte à rouler sur la surface du raidisseur pour assurer un contact mécanique entre le patin de paroi et le raidisseur.

3. Dispositif de contrôle selon la revendication 1 ou 2, **caractérisé en ce que** l'enceinte de protection (20) comporte un réservoir d'eau apte à maintenir un voile d'eau entre le capteur à ultrasons (21) et la surface du raidisseur (R).

4. Dispositif de contrôle selon l'une quelconque des revendications 1 à 3, **caractérisé en ce que** les moyens d'entrainement (30) comportent un moteur (31) relié électriquement à au moins une roue motrice (32) apte à déplacer le portique.

5. Dispositif de contrôle selon l'une quelconque des revendications 1 à 4, **caractérisé en ce que** le portique (10) a une forme de U inversé comportant deux jambes latérales (11, 12) destinées à être positionnées de part et d'autre du raidisseur (R) et un pont (13) reliant les deux jambes latérales.

6. Dispositif de contrôle selon les revendications 4 et 5, **caractérisé en ce que** la roue motrice (32) est logée dans un module (33) solidaire du portique et formant une jambe centrale dudit portique.

7. Dispositif de contrôle selon la revendication 6, **caractérisé en ce que** le module (33) est situé en regard de l'enceinte de protection du capteur à ultrasons (21), le long d'une surface opposée à la surface contrôlée du raidisseur.

8. Dispositif de contrôle selon l'une quelconque des revendications 1 à 7, **caractérisé en ce que** les moyens de localisation comportent un codeur apte à déterminer une position du capteur à ultrasons au fur et à mesure de son déplacement.

9. Dispositif de contrôle selon l'une quelconque des revendications 1 à 8, **caractérisé en ce qu'**il comporte des moyens de détection de fin de trajectoire (80) reliés aux moyens d'entrainement (30) pour arrêter automatiquement le déplacement du portique à la fin du raidisseur.

10. Dispositif de contrôle selon l'une quelconque des revendications 1 à 9, **caractérisé en ce que** l'enceinte de protection du capteur à ultrasons a une forme épousant la forme du raidisseur. (R).

11. Système de contrôle d'un raidisseur d'une structure en matériaux composites d'un aéronef, **caractérisé en ce qu'**il comporte :
- un dispositif de contrôle (1) selon l'une quelconque des revendications 1 à 10,
- un dispositif de visualisation (3) apte à afficher les mesures issues du capteur à ultrasons, et
- un dispositif de commande (2), le dispositif de visualisation et le dispositif de commande étant reliés au dispositif de contrôle.

## Patentansprüche

1. Vorrichtung zur Kontrolle eines Versteifungselements einer Struktur aus Verbundmaterialien eines Luftfahrzeugs, aufweisend
- mindestens einen Ultraschallsensor (21), der geeignet ist, Messungen bezogen auf einen inneren Zustand des Versteifungselements zu liefern,
- ein Schutzgehäuse (20) des Ultraschallsensors, in dem der Ultraschallsensor untergebracht ist,
- ein bewegbares Portal (10), das geeignet ist, sich entlang des Versteifungselements (R) zu bewegen und in welchem das Schutzgehäuse mit dem Ultraschallsensor eingebaut ist, wobei das bewegbare Portal eine Form eines umgekehrten Us aufweist und zwei seitliche Beine aufweist, die beiderseits des Versteifungselements platziert sind,
- Antriebsmittel (30), die geeignet sind, das Portal (10) in Bewegung entlang des Versteifungselements anzutreiben, wobei die Antriebsmittel in einem Modul (33) untergebracht sind, das fest mit dem Portal verbunden ist und ein mittleres Bein des Portals bildet,
- Klemmmittel (40), die fest mit dem Schutzgehäuse verbunden sind und geeignet sind, den Ultraschallsensor (21) gegen die zu kontrollierende Fläche des Versteifungselements (R) gedrückt zu halten,
- Lokalisierungsmittel, um jeden Bereich der Fläche des Versteifungselements mit der Messung des Ultraschallsensors zu synchronisieren.

2. Vorrichtung zur Kontrolle nach Anspruch 1, **dadurch gekennzeichnet, dass** die Klemmmittel (40) Folgendes aufweisen:
- mindestens eine Druckfeder (42),
- eine Wandkufe (41), die eine Vorderseite, die mit einer Vorderseite des Ultraschallsensors ausgerichtet ist, und eine Rückseite, an welcher die Feder anliegt, aufweist, und
- mindestens eine Rolle (43), die in der Vorderseite der Wandkufe untergebracht ist und geeignet ist, auf der Fläche des Versteifungselements zu rollen, um einen mechanischen Kontakt zwischen der Wandkufe und dem Versteifungselement sicherzustellen.

3. Vorrichtung zur Kontrolle nach Anspruch 1 oder 2, **dadurch gekennzeichnet, dass** das Schutzgehäuse (20) einen Wasserbehälter aufweist, der geeignet ist, einen Wasserschleier zwischen dem Ultraschallsensor (21) und der Fläche des Versteifungselements (R) beizubehalten.

4. Vorrichtung zur Kontrolle nach einem der Ansprüche 1 bis 3, **dadurch gekennzeichnet, dass** die Antriebsmittel (30) einen Motor (31) aufweisen, der elektrisch mit mindestens einem Antriebsrad (32) verbunden ist, das geeignet ist, das Portal zu bewegen.

5. Vorrichtung zur Kontrolle nach einem der Ansprüche 1 bis 4, **dadurch gekennzeichnet, dass** das Portal (10) eine Form eines umgekehrten Us aufweist, das zwei seitliche Beine (11, 12) aufweist, die dazu bestimmt sind, beiderseits des Versteifungselements (R) positioniert zu sein, und eine Brücke (13), welche die zwei seitlichen Beine verbindet.

6. Vorrichtung zur Kontrolle nach den Ansprüchen 4 bis 5, **dadurch gekennzeichnet, dass** das Antriebsrad (32) in einem Modul (33) untergebracht ist, das fest mit dem Portal verbunden ist und ein mittleres Bein des Portals bildet.

7. Vorrichtung zur Kontrolle nach Anspruch 6, **dadurch gekennzeichnet, dass** das Modul (33) gegenüber dem Schutzgehäuse des Ultraschallsensors (21) entlang einer Fläche gelegen ist, die der kontrollierten Fläche des Versteifungselements gegenüberliegt.

8. Vorrichtung zur Kontrolle nach einem der Ansprüche 1 bis 7, **dadurch gekennzeichnet, dass** die Lokalisierungsmittel einen Codierer aufweisen, der geeignet ist, eine Position des Ultraschallsensors zu bestimmen, während er sich bewegt.

9. Vorrichtung zur Kontrolle nach einem der Ansprüche 1 bis 8, **dadurch gekennzeichnet, dass** sie Wegende-Erkennungsmittel (80) umfasst, die mit den Antriebsmitteln (30) verbunden sind, um die Bewegung des Portals am Ende des Versteifungselements automatisch zu stoppen.

10. Vorrichtung zur Kontrolle nach einem der Ansprüche 1 bis 9, **dadurch gekennzeichnet, dass** das Schutzgehäuse des Ultraschallsensors eine Form aufweist, welche die Form des Versteifungselements annimmt (R).

11. System zur Kontrolle eines Versteifungselements einer Struktur aus Verbundmaterialien eines Luftfahrzeugs, **dadurch gekennzeichnet, dass** es Folgendes aufweist:
- eine Vorrichtung zur Kontrolle (1) nach einem der Ansprüche 1 bis 10,
- eine Visualisierungsvorrichtung (3), die geeignet ist, die Messungen anzuzeigen, die von dem Ultraschallsensor stammen, und
- eine Steuerungsvorrichtung (2), wobei die Visualisierungsvorrichtung und die Steuerungsvorrichtung mit der Vorrichtung zur Kontrolle verbunden sind.

## Claims

1. Device for inspecting a stiffener of a structure made of composite materials of an aircraft, comprising
- at least one ultrasound sensor (21) suitable for supplying measurements relating to a state of internal health of the stiffener,
- an ultrasound sensor protection enclosure (20), in which said ultrasound sensor is housed,
- a mobile gantry (10) suitable for being displaced along the stiffener (R) and inside which is mounted the protection enclosure with the ultrasound sensor, the mobile gantry being in the form of an inverted U and comprising two lateral legs placed on either side of the stiffener,
- driving means (30) suitable for driving the gantry (10) in displacement along the stiffener, said driving means being housed in a module (33) secured to the gantry and forming a central leg of said gantry,
- gripping means (40), secured to the protection enclosure and suitable for keeping the ultrasound sensor (21) pressed against the surface of the stiffener (R) to be inspected,
- locating means for synchronizing each area of the surface of the stiffener with the measurement of the ultrasound sensor.

2. Inspection device according to Claim 1, **characterized in that** the gripping means (40) comprise:
- at least one pressure spring (42),
- a wall skid (41) having a front face aligned with a front face of the ultrasound sensor and a rear face on which the spring bears, and
- at least one roller (43) housed in the front face of the wall skid and suitable for rolling over the surface of the stiffener to ensure a mechanical contact between the wall skid and the stiffener.

3. Inspection device according to Claim 1 or 2, **characterized in that** the protection enclosure (20) comprises a water tank suitable for maintaining a film of water between the ultrasound sensor (21) and the surface of the stiffener (R).

4. Inspection device according to any one of Claims 1 to 3, **characterized in that** the driving means (30) comprise a motor (31) linked electrically to at least one driving wheel (32) suitable for displacing the gantry.

5. Inspection device according to any one of Claims 1 to 4, **characterized in that** the gantry (10) is in the form of an inverted U comprising two lateral legs (11, 12) intended to be positioned on either side of the stiffener (R) and a bridge (13) linking the two lateral legs.

6. Inspection device according to Claims 4 and 5, **characterized in that** the driving wheel (32) is housed in a module (33) secured to the gantry and forming a central leg of said gantry.

7. Inspection device according to Claim 6, **characterized in that** the module (33) is situated facing the protection enclosure of the ultrasound sensor (21), along a surface opposite the inspected surface of the stiffener.

8. Inspection device according to any one of Claims 1 to 7, **characterized in that** the locating means comprise a coder suitable for determining a position of the ultrasound sensor as it is displaced.

9. Inspection device according to any one of Claims 1 to 8, **characterized in that** it comprises end-of-trajectory detection means (80) linked to the driving means (30) to automatically stop the displacement of the gantry at the end of the stiffener.

10. Inspection device according to any one of Claims 1 to 9, **characterized in that** the protection enclosure of the ultrasound sensor has a form which closely follows the form of the stiffener (R).

11. System for inspecting a stiffener of a structure made of composite materials of an aircraft, **characterized in that** it comprises:
- an inspection device (1) according to any one of Claims 1 to 10,
- a display device (3) suitable for displaying the measurements from the ultrasound sensor, and
- a control device (2), the display device and the control device being linked to the inspection device.
